# EUROPEAN PATENT APPLICATION

(11) **EP 1 136 455 A1**
(43) Date of publication of application: **26.09.2001**
(21) Application number: 01200671.4
(22) Date of filing: 23.02.2001
(51) Int. Cl.: C03B 33/10, C03B 33/12

(54) **Element for cutting glass and similar**

(30) Priority: 20.03.2000 BE 20000206
(71) Applicant: Gielens, Roger Auguste, 1860 Meise (BE)
(72) Inventor: Gielens, Roger Auguste, 1860 Meise (BE)
(74) Representative: Donné, Eddy

(57) **Abstract**

Element for cutting glass and similar, substantially consisting of a holder (2) which is provided with a fixation part (3) and a cutting wheel (4) provided in the holder (2) on an axle (5), characterized in that the element (1), and more particularly the holder (2) and/or the fixation part (3), on one hand, at least partially consists of synthetic material and, on the other hand, also is provided with at least one reinforcement part (6).

## Description

The present invention relates to an element for cutting glass and similar.

More particularly, the invention relates to an element of the type consisting of a holder which is provided with a cutting wheel and with a fixation part provided at the holder, with which part the element can be fixed in a seat of a tool for a cutting table or such.

Elements of the aforementioned type are known whereby the holder and the fixation part are entirely manufactured of metal, and whereby the cutting wheel is provided in this holder by means of an axle.

A disadvantage of this embodiment made of metal consists in that the fixation part thereof does not always fit well into the seat of the tool concerned, as the dimensions of the seat may differ somewhat from tool to tool.

Also, embodiments are known in which the holder and the fixation part are entirely made of synthetic material, with as an advantage that the holder and the fixation part can be manufactured in a simple manner by means of injection moulding and, as a consequence, the cost thereof can be kept relatively low. Also, such embodiments fit better into different tool seats, as the synthetic fixation part is somewhat deformable and therefore adapts automatically.

A disadvantage of such elements with a holder and a fixation part made of synthetic material is that during cutting, whereby a pressure is exerted onto the cutting wheel, the holder easily may become deformed, as a result of which the element may become damaged.

Another disadvantage consists in that, due to the friction which may occur between the plastic holder and the cutting wheel consisting of a hard material, the synthetic holder might wear rapidly, as a result of which the cutting wheel becomes loose and therefore stability and precision are reduced.

A first purpose of the present invention consists in offering an improved element for cutting glass and similar.

A second purpose of the present invention consists in remedying one or more of the aforementioned disadvantages at the same time in a preferred form of embodiment, in other words, offering an element which can be manufactured in a relatively inexpensive manner, which does not become deformed during cutting, which fits into different tool seats and which keeps its precision and stability during the entire service life of the element.

To this aim, the invention in the first place relates to an element for cutting glass and similar, substantially consisting of a holder which is provided with a fixation part and a cutting wheel provided in the holder on an axle, with as a characteristic that the element, on one hand, at least partially consists of synthetic material and, on the other hand, also is provided with at least one reinforcement part. By working, on one hand, with synthetic material and, on the other hand, with a reinforcement part, the possibility is offered of combining different advantages of the known embodiments made of synthetic material with advantages of the known embodiments made of metal.

Preferably, the aforementioned reinforcement part will be manufactured of metal, more particularly of steel.

Preferably, at least the fixation part at least partially consists of synthetic material. As a result, it is obtained that this fixation part can be elastically deformed in an easy manner, as a result of which said part can easily adapt to possible dimensional deviations in the seats in which the elements have to be provided by means of said fixation part.

In the most preferred form of embodiment, the holder and the fixation part are made in one piece and substantially consist of synthetic material, whereas the reinforcement part consists of a rather local element which is entirely or partially embedded in the synthetic material. In practice, this can be realized by injecting the holder and the fixation part around the reinforcement part. Hereby, a whole is obtained which to a large extent consists of synthetic material and therefore is relatively inexpensive, whereas the stability is guaranteed by means of the rather locally present reinforcement part.

Preferably, the axle of the cutting wheel is beared in the reinforcement part, with the advantage that the forces exerted during use are directly compensated by the reinforcement part, and the synthetic material is not loaded locally.

According to another preferred characteristic, the reinforcement part, at the location where the axle is beared in this reinforcement part, is provided with shoulders which fit against the axle, as a result of which a stable mutual support is offered.

The reinforcement part preferably forms the interior side of the seat for the cutting wheel, as a result of which the wear and tear at the holder due to the friction between the wheel and the wall of the seat remains limited.

In practice, the reinforcement part shall be made bow-shaped, more particularly U-shaped, preferably of a bent plate, such that a solid connection between those parts of the holder which are situated at the respective opposite sides of the cutting wheel is obtained.

Preferably, the reinforcement part also shows a support surface which in the practical embodiment consists of the upper side of said bow, as a result of which the pressure forces created during use are transferred to the synthetic material in an optimum manner.

Further, the reinforcement element can also be equipped with additional anchorings in order to anchor it in the synthetic material of the holder. In accordance with the invention, this can be realized in a particularly practical manner by forming a number of openings in the reinforcement element by means of pricking through or similar, such that collars, preferably with irregular edges, are formed. The collars as well as the irregularities of the edges offer an anchoring during embedding into the synthetic material.

With the intention of better showing the characteristics of the invention, hereafter, as an example without any limitative character, several preferred forms of embodiments are described, with reference to the drawings, wherein:
figure 1 in perspective represents a view of a cutting element according to the present invention;
figure 2 represents a side view of the cutting element represented in figure 1;
figure 3 represents a front view of the cutting element represented in figure 1;
figure 4 represents a cross-section according to line IV-IV in figure 2;
figure 5 represents a plate for forming a reinforcement element;
figures 6 and 7 represent two views of the reinforcement element formed of the plate of figure 5;
figure 8 represents a side view of a tool seat with a cutting element according to figure 1 provided therein;
figure 9 represents a cross-section according to line IX-IX in figure 8;
figure 10 represents a cross-section according to line X-X in figure 8;
figure 11 in perspective represents a view of a second form of embodiment of the present invention;
figure 12 represents a side view of the element represented in figure 11;
figure 13 represents a front view of the element represented in figure 11;
figure 14 represents a cross-section according to line XIV-XIV in figure 12.

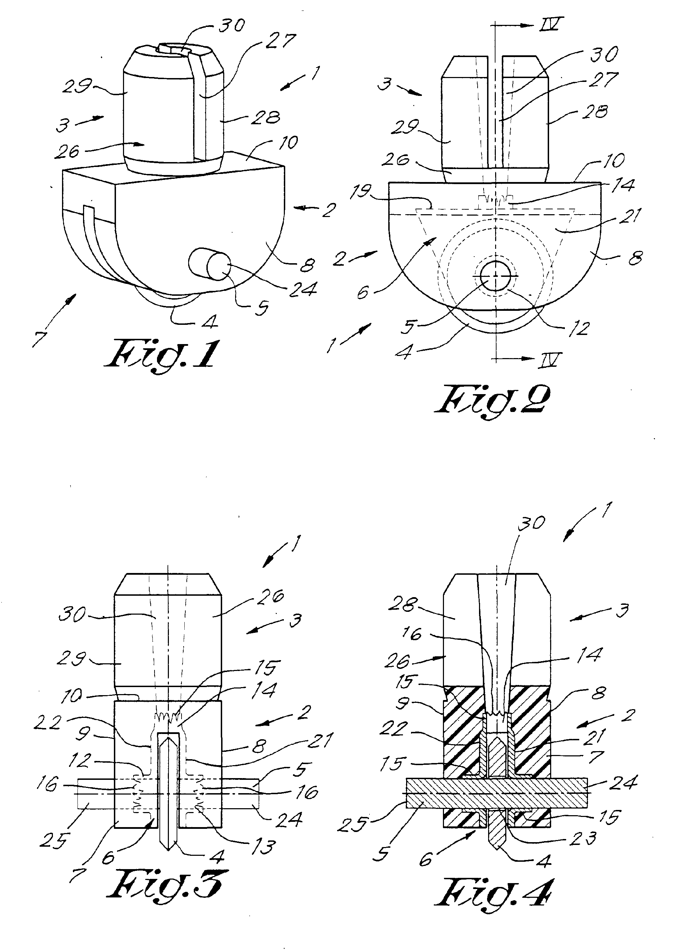

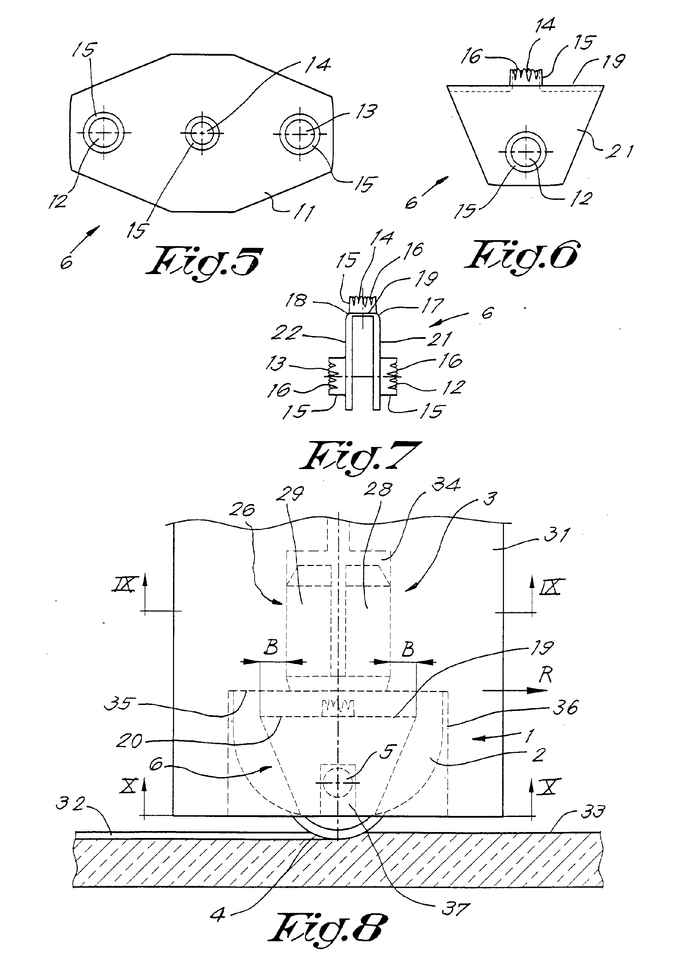

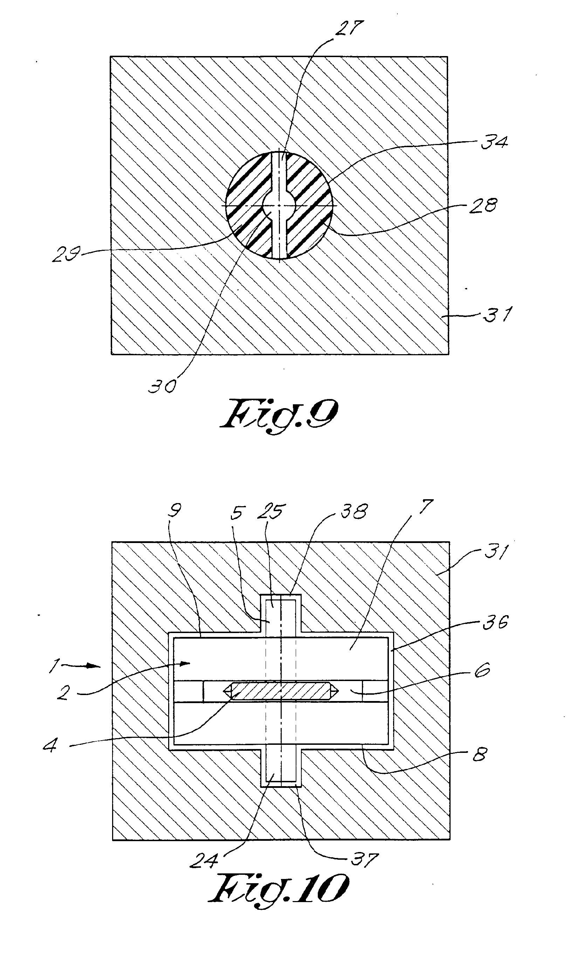

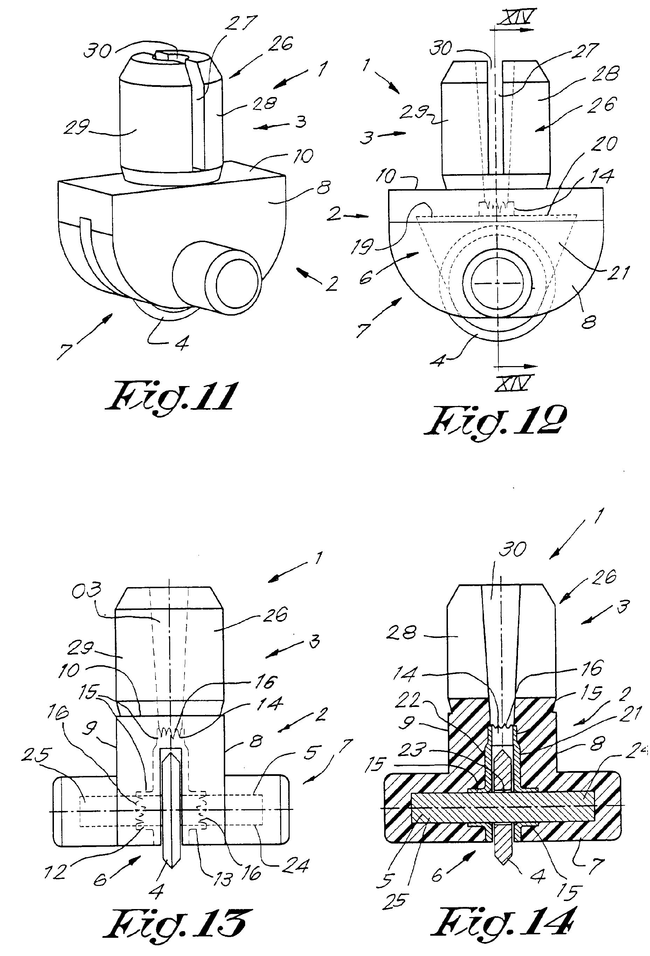

As represented in figures 1 to and including 4, the element 1 substantially consists of a holder 2 with a fixation part 3 and a cutting wheel 4 which is attached in the holder 2 by means of an axle 5.

The particularity of the invention consists in that the element 1, and in particular the holder 2, at least partially and preferably, as represented, to a large extent consists of synthetic material, and that this element 1 further is provided with a reinforcement part 6 preferably made of metal.

The holder 2 is realized as a body 7 which, in a known manner, shows two parallel lateral edges 8 and 9 and an upper side 10 on which the fixation part 3 is situated.

In the represented example, the holder 2 and the fixation part 3 are made in one piece, however, it is evident that it also may be formed by two separate components which are attached to each other.

In the represented example, the reinforcement part 6 is formed of a plate 11 which, as represented in figure 5, is provided with a number of openings, 12, 13 and 14, respectively, and which is bent to a U-shaped bow, as represented in figures 6 and 7.

The openings 12, 13 and 14 preferably are obtained by means of pricking through or similar, such that around these openings collars 15 with an irregular edge 16 are created, the purpose of which will become clear from the further description.

The U-shaped reinforcement part 6 shows two folding edges 17 and 18, an upper wall 19, the upper side of which forms a support surface 20, and two mutually opposed side walls 21 and 22 which are situated perpendicular on the upper wall 19. Said side walls 21 and 22 show a trapezoidal shape, whereby the small basis is directed downward.

In bent condition of the plate 11, the openings 12 and 13 are situated opposite to each other, and opening 14 is situated in the upper wall 19.

In mounted condition, said collars 15 form shoulders, as a result of which a solid fixation of the axle 5 in the reinforcement part 6 is obtained.

Moreover, due to the irregular shape of their edge 16, the collars 15 offer an additional anchoring for the reinforcement part 6 in the synthetic material of the body 7.

It is noted that the axle 5 preferably is clamped in the seats formed by said openings 12 and 13 and that the cutting wheel 4 is mounted in the usual manner freely rotatable on the axle 5. To this aim, said cutting wheel 4 is provided in a known manner with a central opening 23, the diameter of which is somewhat larger than that of the axle 5.

In the form of embodiment of figures 1 to 4, the axle 5 protrudes with both its extremities 24-25 out of the holder 2. Hereby, it is noted that the synthetic material of the element 1 preferably is injected around the reinforcement part 6, after the axle 5 and the cutting wheel 4 have been mounted therein.

The bow-shaped reinforcement part 6 fits rather precisely, with a small lateral play, around the cutting wheel 4, and there is no synthetic material present in between them, such that the cutting wheel 4 laterally exclusively can come into contact with metal, and during use, no abrasion of the material of the holder 2 can occur.

In the represented example, the aforementioned fixation part 3 consists of a cylinder-shaped body 26, with a bevelled edge at the top. Through said body 26, an axially directed groove 27 is extending which divides the body in two parts 28 and 29.

Through said body 26 extends a central channel 30 which also extends through the holder 2 and, through said opening 14, gives out in the seat in which the cutting wheel 4 is mounted, through which channel cooling and/or cutting liquid can be supplied to the cutting wheel 4.

Function and use of the element 1 are as described in the following.

As represented in figures 8 to 10, the element 1 is intended for fixation in a tool 31 for cutting glass or similar, in such a manner that, by means of a mutual displacement between the tool 31 and the glass, as indicated by arrow R, by means of the cutting wheel 4, a notch 32 can be made in the glass surface 33, after which the glass is broken along this notch in a known manner.

The element 1 is held in the tool 31 in that it is clamped in a seat 34 provided to this aim, which clamping, amongst others, is possible due to the transverse groove 27.

The usually exerted pressure force is taken up by a support surface 35, against which the holder 2 is resting with its upper side 10. As the upper side 19 of the reinforcement part 6 extends up to below the upper side 10, in other words, over a distance B up to outside of the fixation part 3, it is obtained that the forces exerted upon the reinforcement part 6 are directly transferred onto the support surface 35.

The body 7 of the element 1 fits into a corresponding cavity 36, such that the element 1, as visible in figure 10, is prevented to turn in the tool 31.

Figure 10 also shows that the protruding extremities 24-25 of the axle 5 are placed in corresponding recesses 27 and 38, as a result of which the axle 5 is kept in its place and cannot be displaced in axial direction.

Figures 11 to 14 show a variant in which the extremities 24 and 25 of the axle 5 are completely surrounded by synthetic material, such that the axle is kept in its place, even if the clamping between the axle 5 and the reinforcement part 6 should be interrupted.

The present invention is in no way limited to the forms of embodiment described in the aforegoing and represented in the figures; on the contrary may such element for cutting glass or similar be realized in different forms and dimensions while still remaining in the scope of the invention.

## Claims

1. Element for cutting glass and similar, substantially consisting of a holder (2) which is provided with a fixation part (3) and a cutting wheel (4) provided in the holder (2) on an axle (5), **characterized in that** the element (1), and more particularly the holder (2) and/or the fixation part (3), on one hand, at least partially consists of synthetic material and, on the other hand, also is provided with at least one reinforcement part (6).

2. Element according to claim 1, **characterized in that** the reinforcement part (6) is made of metal, more particularly steel.

3. Element according to claim 1 or 2, **characterized in that** at least the fixation part (3) at least partially consists of synthetic material.

4. Element according to any of the preceding claims, **characterized in that** the holder (2) and the fixation part (3) are made in one piece and substantially consist of synthetic material, whereas the reinforcement part (6) consists of a more local element which is entirely or partially embedded into the synthetic material.

5. Element according to any of the preceding claims, **characterized in that** the axle (5) is beared in the reinforcement part (6).

6. Element according to claim 5, **characterized in that** the reinforcement part (6), at the location where the axle (5) is beared in said reinforcement part (6), is provided with shoulders which fit against the axle (5).

7. Element according to any of the preceding claims, **characterized in that** the cutting wheel (4) is situated in a seat formed in the holder (2) and that the reinforcement part (6) forms at least a part of the interior of said seat.

8. Element according to any of the preceding claims, **characterized in that** the reinforcement part (6) is bow-shaped, more particularly, U-shaped.

9. Element according to claim 8, **characterized in that** the reinforcement part (6) consists of a bent plate (11).

10. Element according to claim 9, **characterized in that** the bent plate (11) comprises two openings (12-13) for the bearing of the axle (5).

11. Element according to any of the preceding claims, **characterized in that** it is provided with a passage opening (14) for cooling and/or cutting liquid, which passage opening (14) extends through the fixation part (3), the holder (2) and the reinforcement part (6).

12. Element according to any of the preceding claims,
**characterized in that** the reinforcement part (6) comprises a support surface preferably formed by the upper side (19) thereof.

13. Element according to claim 12, **characterized in that** the holder (2) is provided with a support surface (35) and that the upper side (19), the support surface (20), respectively, of the reinforcement part (6) extends at least up to under the aforementioned support surface (35) of the holder.

14. Element according to any of the preceding claims,
**characterized in that** it is provided with additional anchorings in order to anchor the fixation part (6) in the synthetic holder (2).

15. Element according to any of the preceding claims, **characterized in that** the reinforcement part (6) is provided with openings (12-13-14), more particularly for bearing the axle (5) and/or for supplying cooling and/or cutting liquid, which are formed by means of punching or pricking through, as a result of which a collar (15), preferably with an irregular edge (16), is obtained.

16. Element according to any of the preceding claims, **characterized in that** the axle (5) at both extremities protrudes from the holder (2).

17. Element according to any of the claims 1 to 15, **characterized in that** the axle (5) at both extremities is surrounded by the synthetic material of the holder (2).

18. Element according to any of the preceding claims, **characterized in that** it further shows the following combination of characteristics:
- that the holder (2) has two flat side walls (8-9);
- that the holder (2) has a flat upper side (10);
- that the fixation part (3) has a cylindrical shape (26);
- that the fixation part (3) shows a bevelling or rounding at the top; and
- that the fixation part (3) is split.
